## Europäisches Patentamt
## European Patent Office
## Office européen des brevets

(11) Veröffentlichungsnummer: **0 132 709**
**A1**

(12) # EUROPÄISCHE PATENTANMELDUNG

(21) Anmeldenummer: **84108183.9**

(22) Anmeldetag: **12.07.84**

(51) Int. Cl.⁴: **H 01 B 1/12**
**C 08 G 73/06**

(30) Priorität: **19.07.83 DE 3325893**

(43) Veröffentlichungstag der Anmeldung:
**13.02.85 Patentblatt 85/7**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(54) **Verfahren zur Herstellung von feinteiligen elektrisch leitfähigen Pyrrol-Polymerisaten.**

(57) Verfahren zur Herstellung von elektrisch leitfähigen feinteiligen Pyrrol-Polymerisation, wobei man feinteilige Pyrrolpolymerisate, die durch Polymerisation von Pyrrolen in Lösung mit Sauerstoff enthaltenden Oxidations-mitteln erhalten worden sind, in Gegenwart von Leitsalzen elektrochemisch belädt. Die feinteiligen leitfähigen Pyrrol-Polymerisate können zur Herstellung von Formkörpern verwendet werden.

Croydon Printing Company Ltd.

**Verfahren zur Herstellung von feinteiligen elektrisch leitfähigen Pyrrol-
-Polymerisaten**

Die Erfindung betrifft ein Verfahren zur Herstellung von feintiligen elektrisch leitfähigen Pyrrol-Polymerisaten. Weiterhin betrifft die Erfindung die Verwendung dieser feinteiligen elektrisch leitfähigen Pyrrol-Polymerisate zur Herstellung von Formkörpern.

Aus D.E. Weiss et al, Austr. J. Chem. , Seiten 1056, 1076 und 1096 (1963) ist die Pyrolyse von Tetraiodpyrrol bekannt. Hierbei entstehen elektrisch leitfähige Pulver mit hohen Leitfähigkeiten. Die Herstellung solcher leitfähiger Pulver ist jedoch technisch aufwendig und wirtschaftlich ungünstig.

Nach einer Arbeit von K.C. Khulke und R.S. Mann, Journal of Polymer Science, vol 20 (1982, Seiten 1089 bis 1055, kann Pyrrol in wäßriger Lösung unter der Einwirkung von Kaliumpersulfat polymerisiert werden, so daß sich das Polymerisat in Form eines feinteiligen schwarzen Pulvers abscheidet.

Für viele Anwendungszwecke, beispielsweise zur Herstellung von Elektronik-Bauteilen, elektrischen Schaltern, speziellen Elektrodenmaterialien etc. ist es notwendig oder erstrebenswert, die elektrisch leitfähigen feinpulvrigen Pyrrol-Polymeren durch einen weiteren Verarbeitungsschritt in die gewünschte Anwendungsform zu überführen.

Es hat sich gezeigt, daß die bislang zur Verfügung stehenden feinteiligen Pyrrol-Polymeren in ihren Eigenschaften noch nicht allen Anforderungen genügen. Insbesondere ist die elektrische Leitfähigkeit nicht ausreichend. Aufgabe der Erfindung ist es daher, feinteilige elektrisch leitfähige Pyrrol-Polymerisate zu schaffen, die sich für die Verarbeitung zu Formkörpern besser eignen.

Die Aufgabe der Erfindung wird durch ein einfaches Verfahren gelöst, bei dem man feinteilige Pyrrolpolymerisate, die durch Polymerisieren von Verbindungen aus der Klasse der Pyrrole für sich allein oder im Gemisch untereinander oder im Gemisch mit anderen Pyrrolen copolymerisierbaren Verbindungen in Lösung unter der Einwirkung von Sauerstoff enthaltenden Oxidationsmitteln erhalten worden sind, in Gegenwart von Leitsalzen elektrochemisch belädt.

Ein weiterer Gegenstand der Erfindung ist die Verwendung dieser feinteiligen Pyrrol-Polymerisate zur Herstellung von Formkörpern.

vG/P

Bei den erfindungsgemäßen feinteiligen Pyrrol-Polymerisaten handelt es sich um elektrisch hochleitfähige Systeme, deren Leitfähigkeit zwischen $10^{-2}$ bis 10, vorzugsweise zwischen $10^{-1}$ und 5 und insbesondere zwischen 0 und 2,6 S/cm liegt. Der mittlere Teilchendurchmesser kann zwischen 0,05 und 5 mm liegen. Die spezifische Oberfläche liegt im Bereich von 1 bis m²/g. Man kann die erfindungsgemäßen feinteiligen Pyrrol-Polymerisate auch als Komplexe der Ionen und der polymeren Pyrrole bezeichnen. Die polymeren Pyrrole der Erfindung besitzen ein hohes mechanisches Niveau und insgesamt ein ausgewogenes und verbessertes Eigenschaftsbild, insbesondere sehr gute anwendungstechnische Eigenschaften, was sie für die Verwendung zur Herstellung von Formkörpern geeignet macht.

Die Verbindung aus der Klasse der Pyrrole, die sich zur Herstellung der für das erfindungsgemäße geeigneten Polymerisate eignen, sind einmal Pyrrol selbst als auch die substituierten Pyrrole, die N-Alkylpyrrole, N-Arylpyrrole, die an den C-Atomen monoalkyl- oder thialkylsubstituierten Pyrrole und die an den C-Atomen monohalogen oder dihalogen substituierten Pyrrole. Erfindungsgemäß können Pyrrol allein oder in Mischung mit anderen Verbindungen aus der Klasse der Pyrrole verwendet werden. Vorzugsweise verwendet man unsubstituiertes Pyrrol selbst. Werden substituierte Pyrrole eingesetzt, so sind das 3,4-Dialkylpyrrol, insbesondere mit 1 bis 4 C-Atomen im Alkylrest, sowie auch die 3,4-Dihalogenpyrrole, insbesondere das 3,4-Dichlorpyrrol bevorzugt. Es können auch gegebenenfalls geringe Mengen, z.B. zwischen 0,1 und 10 Mol, bezogen auf ein Mol Pyrrol anderer heterocyclischer Verbindungen, die einen konjugierten II-Elektronensystem enthalten, wie Furan, Thiophen oder Thiazol mitverwendet werden.

Zur Herstellung der feinteiligen Pyrrol-Polymerisate werden die Verbindungen aus der Klasse der Pyrrole in Lösung mit Sauerstoff enthaltende Oxidationsmittel behandelt. Zweckmäßig verwendet man aus 1 Mol Pyrrol bzw. Gemischen aus Pyrrolen untereinander oder mit anderen mit Pyrrolen copolymerisierbaren Verbindungen 0,2 bis 10 Mol des Oxidationsmittels. Verwendet man weniger als 1 Mol, so kann man feststellen, daß ein Teil der verwendeten Ausgangssubstanz nicht zu Polymeren umgewandelt wird. Größere Mengen an Oxidationsmitteln zu verwenden ist nicht erforderlich, da die Menge ausreicht, die gesamte Menge der Ausgangsstoffe in Polymere umzuwandeln.

Ein Überschuß über die angegebene Menge hinaus ist jedoch in den meisten Fällen nicht erforderlich, kann jedoch gelegentlich bestimmte Effekte bewirken. Von den Sauerstoff enthaltenden Oxidationsmitteln haben sich besonders Peroxosäuren und deren Salze, die Peroxodischwefelsäure und deren Alkali- und Ammoniumsalze bewährt. Vorzugsweise werden auch Peroxoborate oder Peroxochromate, wie Natriumperborat oder Kaliumbichromat verwendet. Außerdem sind Permanganate, wie Kaliumpermanganat geeignet, wenn man diesen Permanganaten geringe Mengen Säuren zusetzt. Auch ist bevorzugt die Verwendung von Wasserstoffsuperoxid, wobei hierbei die Anwesenheit von Leitsalzen unumgänglich ist.

Die Herstellung der feinteiligen Pyrrol-Polymerisate erfolgt in Lösung, wobei sich Wasser als Lösungsmittel, ggf. in Abmischung mit organischen mit Wasser mischbaren Lösungsmitteln bewährt haben. Es können aber auch organische Lösungsmittel, wie Dimethylsulfoxid, Methylenchlor, Methanol Ethanol, Acetonitril, Sulfolan, Ethylencarbonat, Propylencarbonat, Dioxan oder Tetrahydrofuran, verwendet werden. Bei der Verwendung von organischen mit Wasser nicht mischbaren Lösungsmitteln, hat sich das Einarbeiten geringer Wassermengen in feiner Verteilung in das organische Lösungsmittel bewährt. Vorzugsweise wird zur Herstellung der feinteiligen Pyrrole jedoch Wasser verwendet. Man arbeitet zweckmäßig so, daß die Lösungen 0,1 bis 50, vorzugsweise 1 bis 5 Gew.-% des Pyrrols oder der Gemische der Pyrrole, ggf. mit anderen Verbindungen enthalten. Die Menge der zuzusetzenden Oxidationsmitteln wird nach dem oben angegebenen Prinzip gemessen. Die Umsetzung kann zweckmäßig in einem Temperaturbereich von 0 bis 100°, vorzugsweise von 15 bis 40°C erfolgen. Meistens bekommt man zu zufriedenstellenden Ergebnissen, wenn die Umsetzung bei Raumtemperatur durchgeführt wird. Die erhaltenen feinteiligen Pyrrolpolymerisate werden nun elektrochemisch in Gegenwart eines Leitsalzes beladen. Die Leitsalze werden hierzu in einem Elektrolyten gelöst. Besonders geeignet sind nichtwäßrige Elektrolyte wie Acetonitril, Sulfolan, Eisessig, Dimethylformamid, Propylencarbonat, Tetrahydrofuran, Dietan, Methylchlorid oder Tetrahyrofuran. Das Verhältnis von Leitsalz oder Säure zum feinteiligen Polypyrrol beträgt 0,1 bis 4,5 Gew.-Teile Leitsalz zu 1 Gew.-Teil Polypyrrol.

Den Lösungen werden Leitsalze zugesetzt, die auch als Komplexierungsmittel oder Dotierungsmittel und im englischen Sprachgebrauch als doping-agents bezeichnet werden.

Als Leitsalze haben sich z.B. $KHSO_4$, $Na_2SO_4$, HCOOH, $LiClO_4$, $HClO_4$, $NEt_4ClO_4$, $NBu_4ClO_4$, $KAlF_3$, $NaAlF_6$, $KBF_4$, $K_2TiF_6$, $K_2ZrF_6$, $K_2NiF_4$, $HO_2(NO_3)_2$, $H_2SO_4$, $FeCl_3$, $NOPF_6$, $KAsF_6$ oder $NaPF_6$ bewährt. Die Konzentration der Leitsalze ist so bemessen, daß auf 3 Mol des eingesetzten Pyrrols oder der anderen Monomeren mindestens 1 Mol der oben aufgeführten Leitsalze verwendet werden.

Das elektrochemische Beladen erfolgt in folgender Weise, wie in den Beispielen (z.B. 2) beschrieben wird das Polypyrrol-Pulvern mit den Salzen versetzt und in eine muldenförmige Elektrode angeordnet, dann wird diese Elektrode als Anorde geschaltet. Das Elektrolytsystem ist sichtmäßig und besteht beispielsweise aus Acetonitril und Benzolsulfonsäure-Tributylammonium als Leitsalz.

Es wird bei Stromdichten von 0,01 Amp/cm$^2$ bis 10 mAmp/cm$^2$ gearbeitet. zweckmäßig wählt man Spannungen im Bereich 0,1 bis 100. Die Beladungsdauer liegt im allgemeinen zwischen 0,1 bis 30 Stunden. Die erfindungsgemäß feinteiligen elektrisch leitfähigen Pyrrol-Polymeren, die auch als feinpulvrige Pyrrol-Polymere bezeichnet werden können, haben sehr gute anwendungstechnische Eigenschaften und eignen sich insbesondere zur Herstellung von Formkörpern.

Diese Formkörper können z.B. als Elektroden-Katalysatoren, Diaphragmen, elektrische Speichersysteme, Batterien, Schalter, Halbleiterbauteile, Abschirmmaterialien, Solarzellen verwendet werden. In feinteiliger Form können die verbindungsgemäßen Pyrrol-Polymeren zur antistatischen Ausrüstung von Kunststoffen dienen.

Bei der Herstellung von Formteilen können die üblichen Verfahren des Verpressens der Polymeren unter Druck und Temperatur Anwendung finden. So hat es sich, wie bereits aus der ältern nicht vorveröffentlichten Patentanmeldung hervorgeht, bewährt, in einem Temperaturbereich von 150 bis 300°C und bei Drucken von mindestens 50 bar, vorzugsweise zwischen 100 und 200 bar, zu arbeiten. Mitunter ist es zweckmäßig, die erfindungsgemäß hergestellten feinteiligen Pyrrol-Polymerisate zusammen mit anderen nicht leitfähigen thermoplastischen Kunststoffen zu Formteilen zu verarbeiten, wenn die Eigenschaften entsprechend abgewandelt werden sollen. Auch können die feinteiligen Pyrrol-Polymerisate zusammen mit Produkten, die eine höhere Leitfähigkeit haben, bei der Herstellung von Formkörpern Anwendung finden. Die Erfindung wird durch die nachfolgenden Beispiele näher erläuter. Die in den Beispielen angegebenen Teile sind Gewichtsteile, Prozente, Gewichtsprozente.

## Beispiel 1

Herstellung des feinteiligen Polypyrrols

In Rührkolben wurden wird eine Lösung aus 2 Teilen Pyrrol in 100 Teilen Wasser unter starkem Rühren bei Raumtemperatur mit einer wäßrigen Lösung von $K_2S_2O_8$ langsam versetzt. Das molare Verhältnis von Pyrrol : $K_2S_2O_8$ betrug 6 : 1 Mol. Nach kurzer Zeit scheidet sich ein schwarzer Niederschlag aus, der nach 15 Minuten Reaktionszeit filtriert, mit Wasser neutral gewaschen wird und mit Methanol gespült wird, anschließend wird 8 h bei 0,5 Torr und 50°C getrocknet.

Das feinpulvrige Material hatte einen mittleren Teilchendurchmesser von 0,2 µm und eine Oberfläche von 15 $m^2$/g.

Das feinpulvrige Material wurde zu einer Tablette verpreßt, an der eine Leitfähigkeit von 0,1 S/cm gemessen wurde.

Die gleiche Menge Pyrrol wurde mit der gleichen Menge $K_2S_2O_8$ bei Raumtemperatur in einem Gemisch aus 1 Teil Wasser und 1 Teil Methanol behandelt. Es wurden identische Ergebnisse, wie oben erwähnt, erhalten.

Beispiel 2

Elektrochemisches Beladen von feinteiligen Polypyrrolen

1 Gew.-Teil des nach Beispiel 1 erhaltenen feinteiligen Polypyrrols wurden in einer Durchflußelektrolysenzelle auf einer muldenförmigen Platinelektrode, die als Anode geschalten war, aufgebracht. Es wurden 370 Gew.-Teile Acetonitril, worin 1,5 Teile Benzolsulfonsäure-Tributylammoniumsalz gelöst ist in die Zelle eingebracht, so daß Anode und Polypyrrol von der Lösung umspült werden. Es wurde eine Spannung von 20 Volt angelegt. Die Stromdichte betrug 5 mAmp/$cm^2$. Es wurde für die Dauer von 30 Minuten beladen. Das Pulver wurde isoliert, mit Methanol gewaschen und getrocknet.

Die Leitfähigkeit des Pulvers betrug 5,4 S/cm.

Beispiel 3

Es wurde wie im Beispiel 2 beschrieben gearbeitet und das Polypyrrol entsprechend der folgenden Tabelle behandelt, so wurden jeweils Polypyrrol mit anderen jeweils deutlich erhöhter Leitfähigkeit erhalten.

Tabelle

| Nr. | Elektrolyt Art und Menge | Leitsalz (Säure) Art und Menge | Stromdichte $mAmp/cm^2$ | Zeit Min | Leitfähigkeit $g/cm$ |
|---|---|---|---|---|---|
| 3 | Acetonitril 370 | $\langle\bigcirc\rangle$—$SO_3N(B\bar{u})_3H$ | 10 | 30 | 6,2 |
| 4 | " | $\langle\bigcirc\rangle$—$SO_3\bar{N}B_3H$ | 2 | 60 | 5,1 |
| 5 | " | " | 1 | 90 | 5,3 |
| 6 | " | " | 0,1 | 360 | 5,0 |
| 7 | Propylencarbonat 370 | $LiClO_4$ | 5 | 36 | 8,2 |
| 8 | " | $N\bar{u}_4ClO_4$ | 5 | 36 | 6,5 |
| 9 | " | $K_2TiF_6$ | 5 | 36 | 7,2 |
| 10 | " | $K_2NiF_4$ | 5 | 36 | 7,3 |
| 11 | " | $Na_3AlF_6$ | 5 | 36 | 5,8 |
| 12 | Methylenchlorid 370 | $HClO_4$ | 0,1 | 1200 | 7,2 |
| 13 | Eisessig 370 | $NOPF_6$ | 1 | 90 | 5,9 |

0132709

## Patentansprüche

1. Verfahren zur Herstellung von feinteiligen elektrisch leitfähigen Pyrrol-Polymerisaten, dadurch gekennzeichnet, daß man feinteilige Pyrrolpolymerisate, die durch Polymerisation von Verbindungen aus der Klasse der Pyrrole für sich allein oder im Gemisch untereinander oder im Gemisch mit anderen mit Pyrrolen copolymerisierbaren Verbindungen in Lösung unter der Einwirkung von mit Sauerstoff enthaltenden Oxidationsmitteln erhalten worden sind, in Gegenwart von Leitsalzen elektrochemisch belädt.

2. Verfahren nach Patentanspruch 1, dadurch gekennzeichnet, daß man die feinteiligen Pyrrolpolymerisate in Gegenwart von nichtwäßrigen Elektrolyten elektrochemisch belädt.

3. Verwendung von feinteiligen Pyrrol-Polymerisaten nach Anspruch 1 zur Herstellung von Formkörpern.

| EINSCHLÄGIGE DOKUMENTE | | | EP 84108183.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| Y,D | JOURNAL OF POLYMER SCIENCE, Band 20, Nr. 4, April 1982 K.C. KHULBE & R.S. MANN "Polymerization of Pyrrole by Potassium Persulfate", Seiten 1089-1095 * Zusammenfassung; Seite 1089, Zeile 4 von unten - Seite 1090, Zeile 3 * -- | 1-3 | H 01 B 1/12 C 08 G 73/06 |
| Y | EP - A1 - 0 047 903 (BASF) * Zusammenfassung; Seiten 5-7 * ---- | 1-3 | |
| | | | **RECHERCHIERTE SACHGEBIETE (Int. Cl 4)** |
| | | | H 01 B 1/00 C 08 G 73/00 H 01 L 29/00 |

Der vorliegende Recherchenbericht wurde für alle Patentansprüche erstellt.

| Recherchenort | Abschlußdatum der Recherche | Prüfer |
|---|---|---|
| WIEN | 17-10-1984 | KUTZELNIGG |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82